# EUROPEAN PATENT SPECIFICATION

(11) **EP 3 424 821 B1**
(45) Date of publication and mention of the grant of the patent: **27.01.2021**
(21) Application number: 16891948.8
(22) Date of filing: 29.02.2016
(51) Int. Cl.: B64D 31/00

(54) **THROTTLE CONTROL SIGNAL PROCESSING METHOD, ELECTRONIC SPEED REGULATOR, CONTROLLER, AND MOBILE PLATFORM**
DROSSELSTEUERSIGNALVERARBEITUNGSVERFAHREN, ELEKTRONISCHER DREHZAHLREGLER, STEUERGERÄT UND MOBILE PLATTFORM
PROCÉDÉ DE TRAITEMENT DE SIGNAL DE COMMANDE D'ACCÉLÉRATION, RÉGULATEUR DE VITESSE ÉLECTRONIQUE, CONTRÔLEUR, ET PLATEFORME MOBILE

(43) Date of publication of application: 09.01.2019
(60) Divisional application: 20213825.1
(73) Proprietor: SZ DJI Technology Co., Ltd., Shenzhen, Guangdong 518057 (CN)
(72) Inventor: LAN, Qiu, Shenzhen, Guangdong 518057 (CN); ZHOU, Changxing, Shenzhen, Guangdong 518057 (CN); LIU, Wanqi, Shenzhen, Guangdong 518057 (CN)
(74) Representative: Appelt, Christian W.
(86) International application number: PCT/CN2016/074857
(87) International publication number: WO 2017/147755

(56) References cited:
- WO-A2-2008/097319
- CN-A- 104 756 394
- CN-U- 203 289 361
- CN-U- 205 469 847
- KR-A- 20100 019 070
- US-A1- 2008 002 571
- US-B2- 8 358 578

## Description

### TECHNICAL FIELD

The present disclosure relates to the technical field of aircraft, and in particular to a method for processing throttle control signal, an electronic speed control, a controller, and a mobile platform.

### BACKGROUND

Being one of the most essential components in an aircraft, an electronic speed control is used to drive motor rotation for the aircraft, implementing start-stop operation and speed controlling for the aircraft.

In prior art, a throttle control line is arranged between the electronic speed control and an aircraft controller, through which the controller may transmit a throttle control signal, mostly as a PWM (Pulse Width Modulation) wave or PPM (Pulse Position Modulation) wave, to the electronic speed control during a flight. Upon receiving the throttle control signal, the electronic speed control may control the motor rotation according to the throttle control signal, implementing flight maneuvers.

A drawback in prior art is that, in practical application, the throttle control signal received by the electronic speed control may, for reasons such as damaged wirings, suffer abnormalities, e.g., throttle control signal loss or unstable signal frequency etc., preventing the electronic speed control from properly controlling the motor rotation, even leading to flight accidents in severe cases.

US 8 358 578 B2 discloses a redundant communication system that includes: a first control device which calculates a control command value of an electric power device
equipped in a vehicle, and outputs first and second command signals respectively corresponding to the control command value; a second control device which controls the electric power device on the basis of one of first and second control command values respectively corresponding to the first and the second command signals received from the first control device; a primary communication line which transmits the first command signal from the first control device to the second control device; and a secondary communication line which transmits the second command signal from the first control device to the second control device, wherein the second control device comprises: a primary communication line abnormality determining unit which determines that the primary communication line is abnormal, when a non-reception state of the first command signal or an abnormality state of the first command signal continues during a predetermined period; and a control command value switching unit which selects one of the first and second control command values in a switching manner, and wherein the control command value switching unit switches the selection from the first control command value to the second control command value within the predetermined period from a start time at which the non-reception state of the first command signal or the abnormality state of the first command signal starts until a time at which the primary communication line abnormality determining unit determines that the primary communication line is abnormal.

US 2008/002571 discloses a communication system for transmitting/receiving redundant data between a first communication device and a second communication device, using first and second lines, the first communication device transmits first transmitting data to the first line, and also delays the first transmitting data by a prescribed time and transmits the delayed transmitting data to the second line as second transmitting data. The second communication device delays first receiving data inputted from the first line by the prescribed time and generates the delayed receiving data, and selects one of the second receiving data inputted from the second line and the delayed receiving data.

### SUMMARY

The invention is defined by independent claim 1 according to which a method adapted to an electronic speed control for processing a throttle control signal is defined, independent claim 9 according to which a method adapted to a controller for processing a throttle control signal is defined, independent claim 13 according to which an electronic speed control is defined and independent claim 14 according to which a controller is defined. Preferred embodiments are described in the dependent claims. Embodiments of the present disclosure provide a method for processing a throttle control signal, the method being adapted to an electronic speed control which is arranged with a throttle signal interface for receiving a throttle control signal and a communication interface for transmitting communication data, and the method including:
monitoring a signal transmission state of the throttle signal interface in real time; and
receiving the throttle control signal via the communication interface if the signal transmission state of the throttle signal interface is an abnormal state.

Embodiments of the present disclosure also provide a method for processing a throttle control signal, the method being adapted to a controller which is arranged with a throttle signal interface for transmitting a throttle control signal and a communication interface for transmitting communication data, and the method including:
transmitting a throttle control signal via the communication interface.

Embodiments of the present disclosure also provide a method for processing a throttle control signal, where a throttle channel for transmitting a throttle control signal and a communication channel for transmitting communication data are arranged between an electronic speed control and a controller, and the method includes:
receiving, by the electronic speed control, the throttle control signal via the communication channel if the signal transmission state of the throttle signal interface is an abnormal state.

Embodiments of the present disclosure also provide an electronic speed control, including: a processor; a throttle signal interface for receiving a throttle control signal; and a communication interface for transmitting communication data, where
the processor receives the throttle control signal via the communication interface when the signal transmission state of the throttle signal interface monitored in real time is an abnormal state.

Embodiments of the present disclosure also provide a controller, including: a processor; a throttle signal interface for transmitting a throttle control signal; and a communication interface for transmitting communication data, where
the processor transmits the throttle control signal via the communication interface.

Embodiments of the present disclosure also provide a mobile platform, including: a motor; a controller; and an electronic speed control, where
the motor is connected with the electronic speed control;
a throttle channel for transmitting a throttle control signal and a communication channel for transmitting communication data are arranged between the electronic speed control and the controller,
where the controller transmits a throttle control signal to the electronic speed control via the throttle channel; and the electronic speed control receives the throttle control signal via the communication channel when the signal transmission state of the throttle channel is an abnormal state.

According to the method for processing throttle control signal, electronic speed control, controller and mobile platform provided in embodiments of the present disclosure, signal transmission state is monitored in real time for the throttle signal interface, and the throttle control signal will be received via the communication interface when the signal transmission state of the throttle signal interface is an abnormal state, enabling the electronic speed control to continued its control over motor rotation, preventing the mobile platform from losing control over its dynamics, such as preventing an unmanned aircraft from losing its flight dynamics, thereby ensuring the normal operation for, and improving the reliability of, the mobile platform.

### BRIEF DESCRIPTION OF DRAWINGS

Fig. 1 is a flow diagram of a method for processing throttle control signal provided in a first embodiment of the present disclosure;
Fig. 2 is a schematic diagram of a coupling between an electronic speed control and a controller in a method for processing throttle control signal provided in the first embodiment of the present disclosure;
Fig. 3 is a flow diagram of a method for processing throttle control signal provided in a second embodiment of the present disclosure;
Fig. 4 is a flow diagram of a method for processing throttle control signal provided in a third embodiment of the present disclosure;
Fig. 5 is a flow diagram of a method for processing throttle control signal provided in a fourth embodiment of the present disclosure;
Fig. 6 is a flow diagram of a method for processing throttle control signal provided in a fifth embodiment of the present disclosure;
Fig. 7 is a schematic structural diagram of an electronic speed control provided in a sixth embodiment of the present disclosure;
Fig. 8 is a schematic structural diagram of a controller provided in a seventh embodiment of the present disclosure; and
Fig. 9 is a schematic structural diagram of a mobile platform provided in an eighth embodiment of the present disclosure.

### Reference numerals:

1- Electronic speed control; 11-Processor; 12-Throttle signal interface; 13-The communication interface;
2- Controller; 21-Processor; 22-Throttle signal interface; 23-The communication interface;
3-Motor

### DESCRIPTION OF EMBODIMENTS

Now the technical solutions in embodiments of the present disclosure will be described hereunder clearly and comprehensively with reference to accompanying drawings. Obviously, the described embodiments are only some, rather than all, embodiments of the present disclosure. Any and all other embodiments obtained by persons of ordinary skill in the art based on the presently disclosed embodiments without making any creative effort shall fall into the protection scope of the present disclosure.

Unless otherwise defined, all technical and scientific terms used herein carry the same meaning as those commonly understood by those skilled in the art pertaining to the present disclosure. The terms as used in the description of the present disclosure are merely for the purpose of describing specific embodiments, rather than for limiting the present disclosure. The term "and/or" used herein includes any and all combinations of one or more related listed items.

In the following, some embodiments of the present disclosure will be explained in detail in conjunction with the accompany drawings. The embodiments and the features therein may be recombined with each other, as long as incompatibility does not entail.

### First embodiment

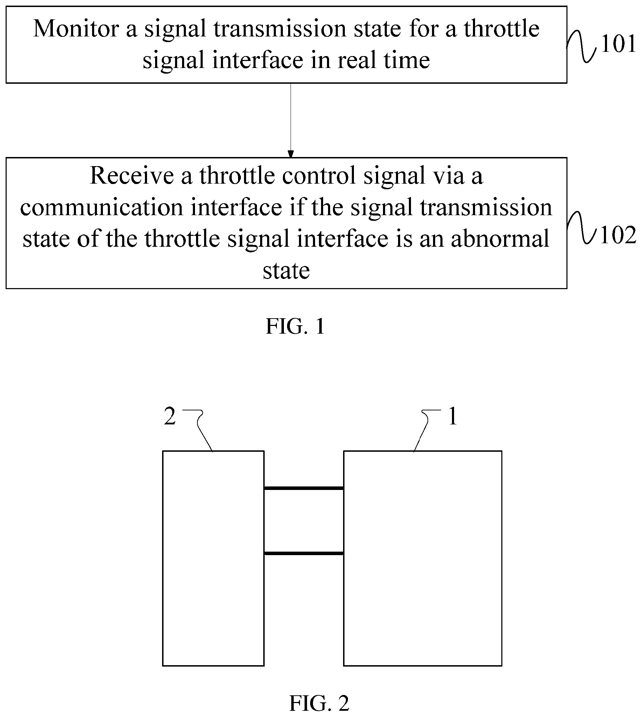

The first embodiment provides a method for processing throttle control signal. Fig. 1 is a flow diagram of a method for processing throttle control signal provided in a first embodiment of the present disclosure. As shown in Fig. 1, the method in this embodiment may include:
S101: monitoring a signal transmission state of the throttle signal interface in real time.

In particular, the method in this embodiment may be adapted to an electronic speed control. In this embodiment, the electronic speed control may receive a throttle control signal transmitted from a controller in an unmanned aircraft, and control the motor rotation of the aircraft according to the throttle control signal, realizing proper flight of the aircraft.

Fig. 2 is a schematic diagram of a coupling between an electronic speed control and a controller in a method for processing throttle control signal provided in the first embodiment of the present disclosure. As shown in Fig. 2, two channels may be arranged between the electronic speed control 1 and the controller 2, one of which is a throttle channel, and another is a communication channel.

The throttle channel may be used to transmit a throttle control signal, which may be a PWM (Pulse Width Modulation) signal or a PPM (Pulse Position Modulation) signal, etc..

The communication channel may be used for transmitting communication data. For example, the controller 2 may transmit an executable file or a debugging parameter to the electronic speed control 1 via the communication channel, thereby enabling the electronic speed control 1 to implement functions such as firmware upgrade and parameter modification, etc.. Via the communication channel, the electronic speed control 1 may transmit to the controller 2 operation data related to an operation state, as well as operation state data of the electronic speed control 1 itself, etc..

The electronic speed control 1 may be arranged with a throttle signal interface for receiving a throttle control signal, and a communication interface for transmitting communication data. The controller 2 may be arranged with a throttle signal interface for transmitting a throttle control signal, and a communication interface for transmitting communication data. The throttle signal interface and the communication interface may have a variety of implementation forms, such as a wiring, a circuit board trace, a terminal, a pin, etc., which will not be limited in this embodiment.

The throttle channels and communication channels described above may also have a variety of implementations. For example, the throttle signal interface of the electronic speed control 1 may be directly connected with the throttle signal interface of the controller 2 to form the throttle channel. Or, the throttle signal interface of the electronic speed control 1 may be electrically connected with the throttle signal interface of the controller 2 via a wiring, a circuit board trace or other components to form the throttle channel. Similarly, the communication interface of the electronic speed control 1 may be directly connected with the communication interface of the controller 2 to form the throttle channel. Or, the communication interface of the electronic speed control 1 may be electrically connected with the communication interface of the controller 2 via a wiring, a circuit board trace or other components to form the communication channel.

In this step, the electronic speed control 1 may monitor the signal transmission state of the throttle signal interface in real time. A normal signal transmission state indicates that the throttle signal interface of the electronic speed control 1 is receiving a normal throttle control signal. If the signal transmission state is abnormal, the throttle signal interface of the electronic speed control 1 is not receiving a normal throttle control signal.

In particular, the abnormal state may be that no throttle control signal is being received via the throttle signal interface, or that the throttle control signal being received via the throttle signal interface is showing abnormality.

The electronic speed control 1 may be equipped with a monitoring circuit for monitoring the signal transmission state of the throttle signal interface. For example, the monitoring circuit may determine whether the throttle control signal of the throttle signal interface is abnormal based on whether characteristic information of the throttle control signal being received via the throttle signal interface satisfies a predefined condition. The characteristic information may be frequency information and/or pulse width information of the throttle control signal.

The monitoring circuit may include a voltage detection circuit or a current detection circuit, which are used for detecting voltage information or current information of the throttle control signal being received via the throttle signal interface, respectively. The monitoring circuit may determine the characteristic information of the throttle control signal based on the voltage information or the current information of the throttle control signal, thereby determining the signal transmission state.

For example, if the monitoring circuit continuously detects zero voltage or current for the signal being received via the throttle signal interface during a predefined time period, it means no throttle control signal is being received via the throttle signal interface.

If a high level shows up every x seconds for a duration of y seconds in a signal being received via the throttle signal interface, the characteristic information of the throttle control signal being received via the throttle signal interface is: frequency of 1/x Hz and pulse width of y seconds.

Assuming that a throttle control signal is in normal state when, according to a predefined condition, its frequency is between *a* to *b* Hz, and its pulse width is between *c* to *d* seconds, then by comparing 1/x with *a* and *b,* and y with *c* and *d,* it may be determined whether the throttle control signal being received via the throttle signal interface is in normal state.

If the 1/x is not within the range of *a* to *b,* or the y is not within the range of *c* to *d,* the throttle control signal being received via the throttle signal interface is abnormal.

The correspondence between the characteristic information of the throttle control signal and the signal transmission state may be configured as needed, which will not be limited to the above manners.

Of course, the signal transmission state of the throttle control interface may also be determined by other components of the electronic speed control 1, which will not be defined in this embodiment.

S102: receiving the throttle control signal via the communication interface if the signal transmission state of the throttle signal interface is an abnormal state.

If the signal transmission state of the throttle signal interface is an abnormal state, the controller 2 may transmit the throttle control signal to the electronic speed control 1 via the communication channel. The electronic speed control 1 may receive the throttle control signal at the communication interface to control the motor rotation normally.

The throttle control signal may be transmitted to the throttle signal interface and the communication interface in different forms. The throttle control signal may be transmitted to the throttle signal interface in an analog signal format, such as a PWM signal or a PPM signal etc.. The throttle control signal may be transmitted to the communication interface in a digital signal format, such as frequency information or pulse width information of the PWM signal or PPM signal.

After receiving the throttle control signal in the digital signal format, the electronic speed control 1 may generate a corresponding PWM signal or PPM signal according to the throttle control signal in the digital signal format, thereby realizing control over the motor.

In practical application, the throttle channel and communication channel may both be provided between the electronic speed control 1 and the controller 2. The controller 2 may transmit communication data to the electronic speed control 1 via the communication channel, enabling the electronic speed control 1 to implement functions such as firmware upgrade and parameter update, etc.. Under ordinary conditions, the electronic speed control 1 receives the throttle control information transmitted from the controller 2 via the throttle channel to control motor rotation. When abnormality occurs to the signal transmission state of the throttle signal interface of the electronic speed control 1, the electronic speed control 1 may still obtain the throttle control signal via the communication interface, thus continuing control over the motor, ensuring normal flight of the aircraft.

According to the method for processing throttle control signal provided in this embodiment, the electronic speed control 1 is provided with a throttle signal interface for receiving a throttle control signal and a communication interface for transmitting communication data. Signal transmission state is monitored in real time for the throttle signal interface, and the throttle control signal will be received via the communication interface when the signal transmission state of the throttle signal interface is an abnormal state, enabling the electronic speed control to maintain proper control over motor rotation, preventing the aircraft from losing control over its frame arm dynamics, thereby ensuring the normal flight for, and improving the reliability of, the aircraft.

In the technical solution provided in the above embodiment, the throttle control signal received by the electronic speed control 1 via the communication interface may be transmitted by the controller 2 via the communication channel either after, or both before and after, abnormality occurs in the signal transmission state of the throttle control interface of the electronic speed control 1. Now, more explanations will be given separately in conjuncture with the second and third embodiment.

### Second embodiment

The second embodiment provides a method for processing throttle control signal. On the basis of the technical solution provided in the first embodiment, this embodiment causes the electronic speed control 1 to transmit a throttle control signal transmission fault message to the controller 2 when the signal transmission state of the throttle control interface is abnormal, so that the controller 2 transmits the throttle control signal to the electronic speed control 1 via the communication channel after receiving the throttle control signal transmission fault message.

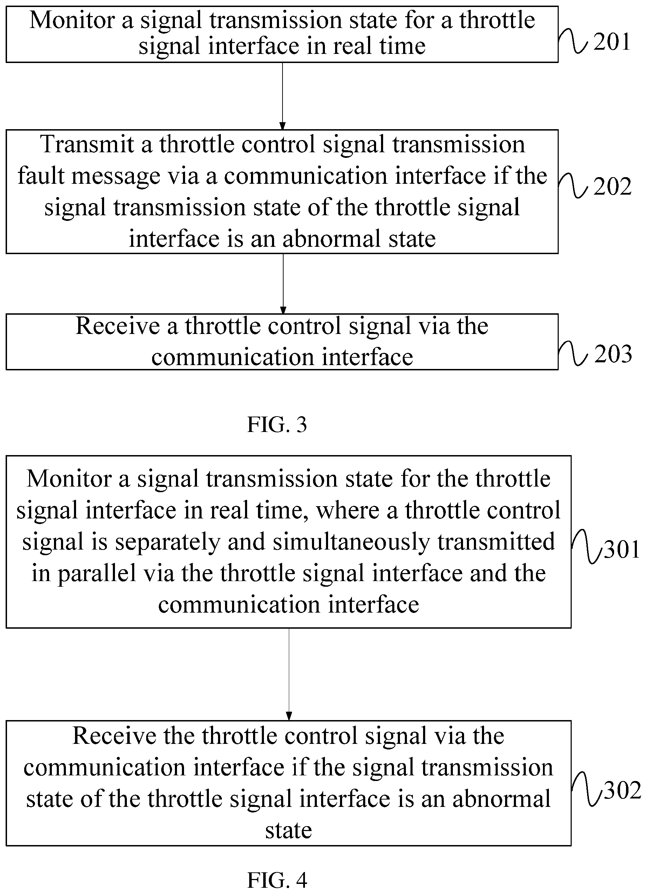

Fig. 3 is a flow diagram of a method for processing throttle control signal provided in a second embodiment of the present disclosure. As shown in Fig. 3, the method in this embodiment may include:
S201: monitoring a signal transmission state of the throttle signal interface in real time.

The S201 in this embodiment is implemented similarly according to the principle of S101 in the first embodiment, which will not be repeated herein.

In this embodiment, the controller 2 transmits the throttle control signal only via the throttle channel, and the electronic speed control 1 receives the throttle control signal only via the throttle control interface, while the signal transmission state of the throttle signal interface is a normal state.

That is to say, before the signal transmission state of the throttle signal interface is abnormal, no throttle control signal is transmitted via the communication channel.

S202, transmitting a throttle control signal transmission fault message via the communication interface if the signal transmission state of the throttle signal interface is an abnormal state.

In particular, the electronic speed control 1 may transmit the throttle control signal transmission fault message via the communication interface, so that the controller 2 may receive the throttle control signal transmission fault message via the communication channel, allowing the controller 2 to be timely informed that a fault has occurred in the throttle control signal received by the electronic speed control 1 at the throttle signal interface.

Further, the controller 2 may transmit the throttle control signal to the electronic speed control 1 via the communication channel based on the throttle control signal transmission fault message.

S203: receiving the throttle control signal via the communication interface.

Through S201 and S202, the controller 2 may transmit the throttle control signal via the communication channel when the signal transmission state of the throttle signal interface of the electronic speed control 1 is abnormal. The electronic speed control 1 described in this step, for one, may receive the throttle control signal at the communication interface, and accordingly control the motor rotation.

According to the method for processing throttle control signal provided in this embodiment, signal transmission state is monitored in real time for the throttle signal interface, and a throttle control signal transmission fault message is transmitted via the communication interface when the signal transmission state of the throttle signal interface is an abnormal state, so that the controller 2 may be timely informed that the electronic speed control 1 has encountered abnormality in receiving the throttle control signal, and that the controller 2 may transmit the throttle control signal to the electronic speed control 1 via the communication channel only when such abnormality occurs, thereby saving signal resource, effectively conserving battery power for the aircraft, and improving the endurance for the aircraft.

Further, the cause of the abnormality may be determined based on the received signal if the signal transmission state of the throttle signal interface is an abnormal state.

For example, if the voltage or current of the signal being received via the throttle signal interface is low, to the extent of being far below ordinary high level voltage or current expected of the PWM signal or PPM signal under normal conditions, insufficient battery level might be indicated. If the voltage or current of the signal being received via the throttle signal interface continues to be at zero, it might be indicated that the throttle channel between the electronic speed control 1 and the controller 2 has been disconnected.

According to the cause of the abnormality, the electronic speed control 1 may perform corresponding remedial actions. For example, enabling backup power when the battery level is low. Or, the throttle control signal transmission fault message transmitted from the electronic speed control 1 to the controller 2 may carry an associated fault ID, causing the controller 2 to perform a proper action according to the fault ID. For example, when the throttle channel is disconnected, the controller 2 may transmit information to the user to report the abnormal case.

Through the electronic speed control 1 and the controller 2, proper action is taken according to the cause of the abnormality, thus more rapidly bringing the signal transmission state of the throttle channel back to normal, further improving the reliability of the aircraft.

On the basis of the technical solution provided in the above embodiment, it is preferred that, if the signal transmission state of the throttle signal interface is back to normal state, the electronic speed control 1 may receive throttle control signal via the throttle signal interface and continue controlling the motor.

Further, if the signal transmission state of the throttle signal interface is back to normal state, the electronic speed control 1 may transmit a throttle control signal transmission restored message via the communication interface to the controller 2. After receiving the throttle control signal transmission restored message, the controller 2 may stop transmitting the throttle control signal via the communication interface.

### Third embodiment

The third embodiment provides a method for processing throttle control signal. On the basis of the technical solution provided in the first embodiment, the controller 2 in this embodiment simultaneously and separately transmits a throttle control signal in parallel through the throttle channel and the communication channel even before the signal transmission state of the throttle control interface turns abnormal.

Fig. 4 is a flow diagram of a method for processing throttle control signal provided in a third embodiment of the present disclosure. As shown in Fig. 4, the method in this embodiment may include:
S301: monitoring the signal transmission state of the throttle signal interface in real time, where the throttle control signal is separately and simultaneously transmitted in parallel to the throttle signal interface and the communication interface.

In particular, the controller 2 may, during a normal flight course of the aircraft, transmit the throttle control signal via the throttle channel and the communication channel separately. That is, the electronic speed control 1 will always, at any instant, receive the throttle control signal via both the throttle signal interface and the communication interface, regardless of whether the signal transmission state of the throttle signal interface is a normal state.

The throttle control signal may be transmitted to the throttle signal interface and the communication interface in different forms. The throttle control signal may be transmitted to the throttle signal interface in an analog signal format, while to the communication interface in a digital signal format.

In this step, the signal transmission state of the throttle signal interface may be determined in the same manner as that of S101 in the first embodiment. For example, whether the throttle control signal being received via the throttle signal interface shows any abnormality is determined based on whether characteristic information of the throttle control signal being received via the throttle signal interface meets any predefined condition.

Other than this, this embodiment also provides another determination method. The electronic speed control 1 may compare the throttle control signal being received via the throttle signal interface with the throttle control signal being received via the communication interface, and the signal transmission state of the throttle signal interface will be a normal state if the corresponding frequency information and/or pulse width information matches, or an abnormal state if otherwise.

Or, the above two manners may be re-combined in assessing the signal transmission state for the throttle signal interface, which may further the accuracy for the assessment.

For example, the signal transmission state of the throttle signal interface may be determined to be a normal state if the characteristic information of the throttle control signal being received via the throttle signal interface satisfies a predefined condition, and the throttle control signal being received via the throttle signal interface is consistent with the throttle control signal being received via the communication interface. Of course, it may also be that the signal transmission state of the throttle signal interface may be determined to be a normal state if the characteristic information of the throttle control signal being received via the throttle signal interface satisfies a predefined condition, or if the throttle control signal being received via the throttle signal interface is consistent with the throttle control signal being received via the communication interface.

S302: if the signal transmission state of the throttle signal interface is an abnormal state, receiving the throttle control signal via the communication interface.

Since the electronic speed control 1 receives the throttle control signals from the throttle signal interface and the communication interface simultaneously, it may switch to the communication interface and go on controlling the motor rotation using the throttle control signal being received via the communication interface when the signal transmission state is abnormal for the throttle signal interface.

In the method for processing throttle control signal provided in this embodiment, the throttle control signal is simultaneously and separately transmitted in parallel to the throttle signal interface and the communication interface of the electronic speed control 1, so that the electronic speed control 1 may still receive the throttle control signal via the communication interface even if the signal transmission state of the throttle signal interface is an abnormal state, and the steps are straightforward to implement.

### Fourth embodiment

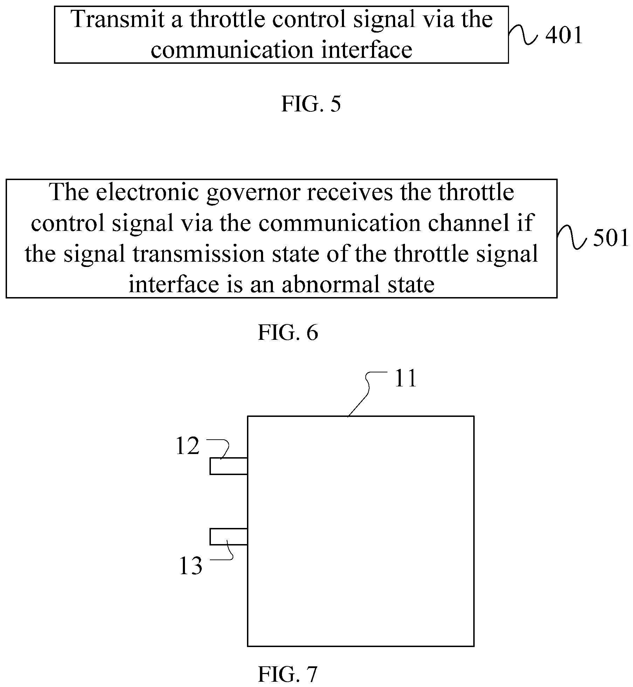

The fourth embodiment provides a method for processing throttle control signal. Fig. 5 is a flow diagram of a method for processing throttle control signal provided in a fourth embodiment of the present disclosure. As shown in Fig. 5, the method in this embodiment may include:
S401: transmitting the throttle control signal via the communication interface.

In particular, the method in this embodiment may be adapted to a controller 2. The controller 2 is arranged with a throttle signal interface for transmitting a throttle control signal, and a communication interface for transmitting communication data. The specific structure, connection with the electronic speed control 1, and the signal interaction process for the controller 2 are similar to those of the first embodiment, and none of which will be repeated herein.

In this embodiment, the controller 2 transmits a throttle control signal via the communication interface, which may include at least two implementations.

In one implementation, the throttle control signal is initially transmitted via the throttle signal interface, and then via the communication interface when the signal received at the electronic speed control 1 via the throttle signal interface is abnormal. In particular, S401 may include: receiving a throttle control signal transmission fault message via the communication interface, and transmitting the throttle control signal via the communication interface according to the message, through a process which may be understood by referring to the second embodiment.

Further, a throttle control signal transmission recovery message may be received via the communication interface, so that transmission of the throttle control signal via the communication interface may be stopped according to the throttle control signal transmission recovery message.

In another implementation, a throttle control signal may be transmitted via the communication interface even while the throttle control signal is being transmitted via the throttle signal interface. That is to say, the throttle control signal is transmitted both via the throttle signal interface and the communication interface simultaneously and separately, through a specific implementation which may be understood by referring to the third embodiment.

According to the method for processing throttle control signal provided in this embodiment, a controller 2 is provided with a throttle signal interface for transmitting a throttle control signal and a communication interface for transmitting communication data, and the controller 2 may also transmit the throttle signal via the communication interface, enabling an electronic speed control 1 to receive the throttle control signal via a communication channel and to continue controlling the motor rotation as usual when signal being received via the throttle channel is abnormal, preventing the frame arm of the aircraft from losing control over its dynamics, ensuring the normal flight of the aircraft, and improving the reliability for the aircraft.

On the basis of the technical solution provided in the above embodiment, it is preferable that the throttle control signals transmitted via the throttle signal interface and the communication interface are in different signal formats.

The throttle control signal sent via the throttle signal interface may be an analog signal, while the one via the communication interface may be a digital signal.

### Fifth embodiment

The fifth embodiment provides a method for processing throttle control signal. Fig. 6 is a flow diagram of a method for processing throttle control signal provided in a fifth embodiment of the present disclosure. As shown in Fig. 6, the method in this embodiment may include:
S501: receiving, by the electronic speed control 1, the throttle control signal via the communication channel if the signal transmission state of the throttle signal interface is an abnormal state.

In particular, the method in this embodiment may be adapted to an electronic speed control 1 and a controller 2. A throttle channel for transmitting a throttle control signal and a communication channel for transmitting communication data are arranged between the electronic speed control 1 and the controller 2. The specific structures, interconnections, and interactions for individual components in this embodiment are similar to those of the foregoing embodiments, and none of which will be repeated herein.

According to the method for processing throttle control signal provided in this embodiment, a throttle channel for transmitting a throttle control signal and a communication channel for transmitting communication data are arranged between the electronic speed control 1 and the controller 2, so that the electronic speed control 1 may receive the throttle control signal via the communication channel when the signal transmission state of the throttle channel is an abnormal state, enabling the electronic speed control 1 to maintain proper control over motor rotation, preventing the aircraft from losing control over its frame arm dynamics, thereby ensuring the normal flight for, and improving the reliability of, the aircraft.

Further, the abnormal state may be that no throttle control signal is being received via the throttle channel, or that the throttle control signal being received via the throttle channel shows abnormality.

Further, the electronic speed control 1 may determine whether the throttle control signal being received via the throttle channel is abnormal according to whether the characteristic information of the throttle control signal being received via the throttle channel satisfies a predefined condition. The characteristic information may be frequency information and/or pulse width information of the throttle control signal. If the signal transmission state is an abnormal state, the electronic speed control 1 may transmit a throttle control signal transmission fault message to the controller 2 via the communication channel, so that the controller 2 may transmit a throttle control signal to the electronic speed control 1 via the communication channel upon receiving the throttle control signal fault message.

Or, the throttle control signal may be simultaneously and separately transmitted in parallel via the throttle channel and the communication channel.

Further, the throttle control signal may be transmitted via the throttle channel and the communication channel in different forms.

The throttle control signal may be transmitted to the throttle channel in an analog signal format, while to the communication channel in a digital signal format.

Further, if the signal transmission state of the throttle channel is back to normal, the electronic speed control 1 may receive the throttle control signal via the throttle channel.

### Sixth embodiment

The sixth embodiment of this disclosure provides an electronic speed control. Fig. 7 is a schematic structural diagram of an electronic speed control provided in a sixth embodiment of the present disclosure. As shown in Fig. 7, the electronic speed control in this embodiment may include:
a processor 11; a throttle signal interface 12 for receiving a throttle control signal; and a communication interface 13 for transmitting communication data.

Here, the processor 11 receives the throttle control signal via the communication interface 13 when the signal transmission state of the throttle signal interface 12 monitored in real time is an abnormal state.

The electronic speed control in this embodiment may be used in performing the method for processing throttle control signal described in the first embodiment. The functions and the implementations of individual component of the electronic speed control in this embodiment are similar to those in the first embodiment, and none of which will be repeated herein.

The function of the processor 11 in this embodiment may be implemented using software or a hardware module. For example, the characteristic information of the throttle control signal being received via the throttle signal interface 12 may be determined using a counter, a timer and a comparer. The comparer may be used in implementing the determining whether the throttle control signal being received via the throttle signal interface 12 is abnormal according to whether the characteristic information satisfies a predefined condition. A switch may be used in implementing the switching from the throttle control interface to the communication interface 13 to receive the throttle control signal.

The electronic speed control provided in this embodiment includes a processor 11, a throttle signal interface 12 for receiving a throttle control signal, and a communication interface 13 for transmitting communication data, where the processor 11 receives the throttle control signal via the communication interface 13 when the signal transmission state of the throttle signal interface 12 is an abnormal state, so as to maintain proper control over motor rotation, preventing the aircraft from losing control over its frame arm dynamics, thereby ensuring the normal flight for, and improving the reliability of, the aircraft.

Further, the electronic speed control may also include a monitoring circuit for monitoring the signal transmission state of the throttle signal interface 12, and the monitoring circuit is communicatively connected with the processor 11 for transmitting the signal transmission state to the processor 11.

The monitoring circuit may also be implemented in a way similar to that of the first embodiment, which will not be repeated herein. The processor 11, monitoring circuit, throttle signal interface 12 and communication interface 13 may be integrated together, i.e., into a single integrated chip. Or, the processor 11, monitoring circuit, throttle signal interface 12 and communication interface 13 may be provided separately.

Further, the abnormal state may be that no throttle control signal is received via the throttle signal interface 12, or that the throttle control signal being received via the throttle signal interface 12 shows abnormality.

Further, the processor 11 may determine whether the throttle control signal being received via the throttle signal interface 12 is abnormal according to whether the characteristic information of the throttle control signal being received via the throttle signal interface 12 satisfies a predefined condition. If the signal transmission state of the throttle signal interface 12 is an abnormal state, the throttle control signal will be received via the communication interface 13. The characteristic information is frequency information and/or pulse width information of the throttle control signal.

Further, the processor 11 may transmit a throttle control signal transmission fault message via the communication interface 13 and receive the throttle control signal via the communication interface 13 when the signal transmission state of the throttle signal interface 12 is an abnormal state.

Or, the throttle control signal may be simultaneously and separately transmitted in parallel to the throttle signal interface 12 and the communication interface 13.

Further, the throttle control signal may be transmitted to the throttle signal interface 12 and the communication interface 13 in different forms. The throttle control signal may be transmitted to the throttle signal interface 12 in an analog signal format. The throttle control signal may be transmitted to the communication interface 13 in a digital signal format.

Further, the processor 11 may revert to receiving the throttle control signal via the throttle signal interface 12 when the signal transmission state of the throttle signal interface 12 is restored to a normal state.

### Seventh embodiment

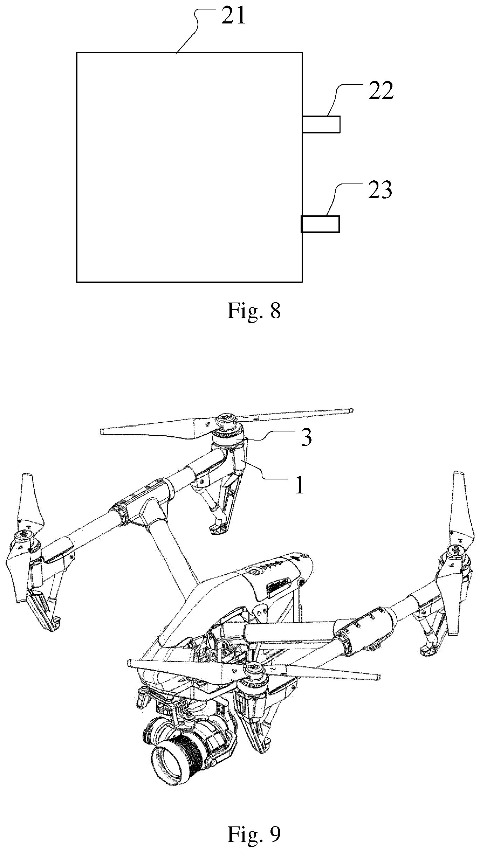

The seventh embodiment of this disclosure provides a controller. Fig. 8 is a schematic structural diagram of a controller provided in a seventh embodiment of the present disclosure. As shown in Fig. 8, the controller in this embodiment may include:
a processor 21; a throttle signal interface 22 for transmitting a throttle control signal; and a communication interface 23 for transmitting communication data.

The processor 21 may transmit a throttle control signal via the communication interface 23.

The controller in this embodiment may be used in performing the method for processing throttle control signal described in the fourth embodiment. The functions and the implementations of individual component of the controller in this embodiment are similar to those in the fourth embodiment, and none of which will be repeated herein.

A controller provided in this embodiment includes a processor 21, a throttle signal interface 22 for transmitting a throttle control signal, and a communication interface 23 for transmitting communication data. The processor 21 may also transmit the throttle signal via the communication interface, enabling an electronic speed control to receive the throttle control signal via a communication channel and continue to control the motor rotation as usual when signal being received via the throttle channel is abnormal, preventing the frame arm of the aircraft from losing control over its dynamics, ensuring the normal flight of the aircraft, and improving the reliability for the aircraft.

Further, the controller described in this embodiment may also include a throttle signal generating circuit for generating a throttle control signal, and the throttle signal generating circuit is communicatively connected with the processor 21 for transmitting the generated throttle control signal to the processor 21.

The throttle control signal may include a switch tube and other components to generate a PWM signal or a PPM signal as the throttle control signal.

The processor 21, throttle signal generating circuit, throttle signal interface 22 and communication interface 23 may be integrated together, i.e., into a single integrated chip. Or, the processor 21, throttle signal generating circuit, throttle signal interface 22 and communication interface 23 may be provided separately.

Further, the processor 21 may receive throttle control signal transmission fault information via the communication interface 23, and transmits the throttle control signal via the communication interface 23 upon the throttle control signal transmission fault information.

Or, the throttle control signal may be simultaneously and separately transmitted via the throttle signal interface 22 and the communication interface 23.

Further, the throttle control signal may be transmitted via the throttle signal interface 22 and the communication interface 23 in different forms.

The throttle control signal sent via the throttle signal interface 22 may be an analog signal,
while the one via the communication interface 23 may be a digital signal.

Further, the processor 21 may receive a throttle control signal transmission recovery message via the communication interface 23, so that transmission of the throttle control signal via the communication interface 23 may be stopped upon the throttle control signal transmission recovery message.

### Eighth embodiment

The eighth embodiment of this disclosure provides a mobile platform. Fig. 9 is a schematic structural diagram of a mobile platform provided in an eighth embodiment of the present disclosure. The mobile platform shown in Fig. 9 is an unmanned aircraft. Of course, the mobile platform may also be a camera cradle, a remotely controlled fighting vehicle, or other devices, which will not be defined in this embodiment. Fig. 9 is only for illustrating the structure of a mobile platform as an example.

As shown in Fig. 9, the mobile platform provided in this embodiment may include: a motor 3; a controller (not shown); and an electronic speed control 1, where
the motor 3 is connected with the electronic speed control 1;
a throttle channel for transmitting a throttle control signal and a communication channel for transmitting communication data are arranged between the electronic speed control 1 and the controller,
where the controller transmits a throttle control signal to the electronic speed control 1 via the throttle channel; and the electronic speed control 1 receives the throttle control signal via the communication channel when the signal transmission state of the throttle channel is an abnormal state.

The mobile platform in this embodiment may be used in performing the method for processing throttle control signal described in the fifth embodiment. The functions and the implementations of individual component of the mobile platform in this embodiment are similar to those in the fifth embodiment, and none of which will be repeated herein.

The mobile platform provided in this embodiment includes a motor 3, a controller, an electronic speed control 1, a throttle channel for transmitting a throttle control signal and a communication channel for transmitting communication data arranged between the electronic speed control 1 and the controller, where the electronic speed control 1 may receive the throttle control signal via the communication channel when the signal transmission state of the throttle channel is an abnormal state, so as to maintain proper control over the rotation of the motor 3, preventing the aircraft from losing control over its frame arm dynamics, thereby ensuring the normal flight for, and improving the reliability of, the aircraft.

Further, the abnormal state may be that no throttle control signal is received via the throttle channel, or the throttle control signal being received via the throttle channel is exhibiting abnormality.

Further, the electronic speed control 1 may determine whether the throttle control signal being received via the throttle channel is abnormal according to whether the characteristic information of the throttle control signal being received via the throttle channel satisfies a predefined condition.

Further, the characteristic information may be frequency information and/or pulse width information of the throttle control signal.

Further, if the signal transmission state is an abnormal state, the electronic speed control 1 may transmit a throttle control signal transmission fault message to the controller via the communication channel.

Accordingly, the controller may transmit the throttle control signal to the electronic speed control 1 via the communication channel based on the throttle control signal fault message.

Or, the throttle control signal may be simultaneously and separately transmitted in parallel via the throttle channel and the communication channel.

Further, the throttle control signal may be transmitted to the throttle channel and the communication channel in different forms.

The throttle control signal may be transmitted to the throttle channel in an analog signal format, while to the communication channel in a digital signal format.

Further, the electronic speed control 1 may receive the throttle control signal via the throttle channel if the signal transmission state of the throttle channel is back to normal.

In the several embodiments provided in the present disclosure, it should be understood that, the disclosed device and method involved may be implemented in other ways. For example, the device embodiments described above are merely illustrative, e.g. the modules or units are categorized according to logical functions only, and other categories can be used in actual implementations. For instance, multiple units or components may be combined or integrated into another system, or some features can be omitted or skipped. Moreover, an illustrated or discussed coupling or direct coupling or communication connection may be an indirect coupling or communicative connection an interface, device or unit, and may be in electrical, mechanical, or other forms.

The units described as separate members may be or may not be physically separated. The members shown as units may be or may not be physical units, and may be located at the same place or may be distributed in multiple network units. Some or all of the elements may be selected according to the actual needs for realizing the objectives of the solutions of the embodiments.

In addition, various functional units in various embodiments of the present disclosure may be integrated into a single processing unit, or each unit may be presented in physically separated forms, or two or more units may be integrated into a single unit. The above-mentioned integrated unit can be implemented in the form of hardware or a software functional unit.

The integrated unit may, if implemented in a form of a software functional unit and marketed or used as a standalone product, be stored in a computer-readable storage medium. Based on these understandings, the essence of the technical solution of this disclosure, or the part thereof contributing to the prior art, or all or part of the technical solution may be embodied in the form of a software product. The computer software product may be stored in a storage medium, and may include a number of instructions that can cause a computer processor to carry out all or part of the steps in various embodiments of this disclosure. The storage medium described above may include a USB disk, a mobile hard disk, a read-only memory (ROM), a random access memory (RAM), a magnetic disk, an optical disk, and the like, each of which can store program code.

Finally, it should be noted that the foregoing embodiments are merely intended for describing, rather than limiting, the technical solutions of the present disclosure. Although the present disclosure is described in detail with reference to the foregoing embodiments, persons of ordinary skill in the art should understand that it remains possible to make modifications to the technical solutions described in the foregoing embodiments, or make replacements to some or all technical features therein. However, these modifications or replacements do not make the essence of corresponding technical solutions depart from the scope of the present invention as claimed.

## Claims

1. A method for processing throttle control signal, the method being adapted to an electronic speed control (1) which is provided with a throttle signal interface (12) for receiving a throttle control signal, and a communication interface (13) for transmitting communication data, and the method comprising:
receiving, from a controller (2), the throttle control signal via the throttle signal interface (12); and
receiving, from the controller (2), an executable file or a debugging parameter via the communication interface (13); and transmitting, to the controller (2), operation data via the communication interface (13); and
monitoring a signal transmission state of the throttle signal interface (12) in real time; and
determining that the throttle signal received at the throttle signal interface (12) is abnormal; and
receiving the throttle control signal via the communication interface (13) if the signal transmission state of the throttle signal interface (12) is an abnormal state.

2. The method according to claim 1, wherein the abnormal state is that no throttle control signal is being received via the throttle signal interface (12), or that the throttle control signal being received via the throttle signal interface (12) shows unstable signal frequency.

3. The method according to claim 2, wherein:
whether the throttle control signal being received via the throttle signal interface (12) shows unstable signal frequency is determined based on whether characteristic information of the throttle control signal being received via the throttle signal interface (12) meets a predefined condition.

4. The method according to claim 3, wherein the characteristic information is frequency information, and/or pulse width information, of the throttle control signal.

5. The method according to claim 1, further comprising:
transmitting a throttle control signal transmission fault message via the interface (13) if the signal transmission state of the throttle signal interface (12) is an abnormal state.

6. The method according to claim 1, wherein the throttle control signal is simultaneously and separately transmitted in parallel via the throttle signal interface (12) and the communication interface (13).

7. The method according to claim 1, wherein the throttle control signal is in different signal formats when being transmitted via the throttle signal interface (12) and the communication interface (13).

8. The method according to claim 1, further comprising:
receiving the throttle control signal via the throttle signal interface (12) when the signal transmission state of the throttle signal interface (12) is a normal state.

9. A method for processing throttle control signal, the method being adapted to a controller (2) which is provided with a throttle signal interface (12) for transmitting a throttle control signal, and a communication interface (13) for transmitting communication data, and the method comprising:
transmitting, to an electronic speed control (1), the throttle control signal via the throttle signal interface (12); and
transmitting, to the electronic speed control (1) an executable file or a debugging parameter via the communication interface (13);
receiving, from the electronic speed control (1), operation data via the communication interface (13); and
transmitting a throttle control signal via the communication interface (13).

10. The method according to claim 9, wherein the transmitting a throttle control signal via the communication interface (13) comprises:
receiving a throttle control signal transmission fault message via the communication interface (13); and
transmitting the throttle control signal via the communication interface (13) according to the throttle control signal transmission fault message.

11. The method according to claim 9, wherein the throttle control signal is simultaneously and separately transmitted via the throttle signal interface (12) and the communication interface (13).

12. The method according to claim 10, further comprising:
receiving a throttle control signal transmission recovery message via the communication interface (13); and
stopping transmitting the throttle control signal via the communication interface (13) according to the throttle control signal transmission recovery message.

13. An electronic speed control (1), comprising: a processor; a throttle signal interface (12) for receiving a throttle control signal; and a communication interface (13) for transmitting communication data,
wherein the throttle signal interface (12) is configured to receive the throttle control signal from a controller (2), and
wherein the communication interface (13) is configured to receive an executable file or a debugging parameter from the controller (2), and
wherein the communication interface (13) is configured to transmit operation data to the controller (2),
and wherein the electronic speed control (1) comprises a monitoring circuit configured to determine whether the throttle control signal received at the throttle signal interface (13) is abnormal, and wherein the processor is configured to receive the throttle control signal via the communication interface (13) when the signal transmission state of the throttle signal interface (12) monitored in real time is an abnormal state.

14. A controller (2) for use with the electronic speed control (1) of claim 13, comprising: a processor; a throttle signal interface (12) for transmitting a throttle control signal; and a communication interface (13) for transmitting communication data, wherein
the throttle control signal interface (12) is configured to transmit, to the electronic speed control (1), the throttle control signal; and
the communication interface (12) is configured to transmit, to the electronic speed control (1) an executable file or a debugging parameter;
wherein the communication interface (13) is configured to receive, from the electronic speed control (1), operation data via the communication interface (13); and
the processor is configured to transmit the throttle control signal via the communication interface (13).

15. A mobile platform, compromising: a motor; a controller (2) according to claim 14; and an electronic speed control (1) according to claim 13, wherein
the motor (3) is connected with the electronic speed control;
a throttle channel for transmitting a throttle control signal and a communication channel for transmitting communication data are arranged between the electronic speed control (1) and the controller (2),
wherein the controller (2) transmits a throttle control signal to the electronic speed control (1) via the throttle channel; and the electronic speed control (1) receives the throttle control signal via the communication channel when the signal transmission state of the throttle channel is an abnormal state.

## Patentansprüche

1. Verfahren zum Verarbeiten eines Drosselsteuersignals, wobei das Verfahren an eine elektronische Drehzahlsteuerung (1) angepasst ist, die mit einer Drosselsignalschnittstelle (12) zum Empfangen eines Drosselsteuersignals und einer Kommunikationsschnittstelle (13) zum Übertragen von Kommunikationsdaten versehen ist, und wobei das Verfahren Folgendes umfasst:
Empfangen des Drosselsteuersignals via die Drosselsignalschnittstelle (12) von einer Steuerung (2) und
Empfangen einer ausführbaren Datei oder eines Debuggingparameters via die Kommunikationsschnittstelle (13) von der Steuerung (2) und
Übertragen von Betriebsdaten via die Kommunikationsschnittstelle (13) zur Steuerung (2) und
Überwachen eines Signalübertragungszustands der Drosselsignalschnittstelle (12) in Echtzeit und
Bestimmen, dass das an der Drosselsignalschnittstelle (12) empfangene Drosselsignal unnormal ist; und
Empfangen des Drosselsteuersignals via die Kommunikationsschnittstelle (13), wenn der Signalübertragungszustand der Drosselsignalschnittstelle (12) ein unnormaler Zustand ist.

2. Verfahren nach Anspruch 1, wobei der unnormale Zustand der ist, dass via die Drosselsignalschnittstelle (12) kein Drosselsteuersignal empfangen wird oder dass das Drosselsteuersignal, das via die Drosselsignalschnittstelle (12) empfangen wird, eine instabile Signalfrequenz zeigt.

3. Verfahren nach Anspruch 2, wobei:
ob das Drosselsteuersignal, das via die Drosselsignalschnittstelle (12) empfangen wird, eine instabile Signalfrequenz zeigt, darauf basierend bestimmt wird, ob charakteristische Informationen des Drosselsteuersignals, das via die Drosselsignalschnittstelle (12) empfangen wird, eine vordefinierte Bedingung erfüllen.

4. Verfahren nach Anspruch 3, wobei die charakteristischen Informationen Frequenzinformationen und/oder Impulsbreiteninformationen des Drosselsteuersignals sind.

5. Verfahren nach Anspruch 1, das ferner Folgendes umfasst:
Übertragen einer Drosselsteuersignalübertragungsfehlernachricht via die Schnittstelle (13), wenn der Signalübertragungszustand der Drosselsignalschnittstelle (12) ein unnormaler Zustand ist.

6. Verfahren nach Anspruch 1, wobei das Drosselsteuersignal via die Drosselsignalschnittstelle (12) und die Kommunikationsschnittstelle (13) gleichzeitig und separat parallel übertragen wird.

7. Verfahren nach Anspruch 1, wobei das Drosselsteuersignal in verschiedenen Signalformaten vorliegt, wenn es via die Drosselsignalschnittstelle (12) und die Kommunikationsschnittstelle (13) übertragen wird.

8. Verfahren nach Anspruch 1, das ferner Folgendes umfasst:
Empfangen des Drosselsteuersignals via die Drosselsignalschnittstelle (12), wenn der Signalübertragungszustand der Drosselsignalschnittstelle (12) ein normaler Zustand ist.

9. Verfahren zum Verarbeiten eines Drosselsteuersignals, wobei das Verfahren an eine Steuerung (2) angepasst ist, die mit einer Drosselsignalschnittstelle (12) zum Übertragen eines Drosselsteuersignals und einer Kommunikationsschnittstelle (13) zum Übertragen von Kommunikationsdaten versehen ist, und wobei das Verfahren Folgendes umfasst:
Übertragen des Drosselsteuersignals via die Drosselsignalschnittstelle (12) zu einer elektronischen Drehzahlsteuerung (1) und
Übertragen einer ausführbaren Datei oder eines Debuggingparameters via die Kommunikationsschnittstelle (13) zu einer elektronischen Drehzahlsteuerung (1);
Empfangen von Betriebsdaten via die Kommunikationsschnittstelle (13) von der elektronischen Drehzahlsteuerung (1) und
Übertragen eines Drosselsteuersignals via die Kommunikationsschnittstelle (13).

10. Verfahren nach Anspruch 9, wobei das Übertragen eines Drosselsteuersignals via die Kommunikationsschnittstelle (13) Folgendes umfasst:
Empfangen einer Drosselsteuersignalübertragungsfehlernachricht via die Kommunikationsschnittstelle (13) und
Übertragen des Drosselsteuersignals via die Kommunikationsschnittstelle (13) gemäß der Drosselsteuersignalübertragungsfehlernachricht.

11. Verfahren nach Anspruch 9, wobei das Drosselsteuersignal via die Drosselsignalschnittstelle (12) und die Kommunikationsschnittstelle (13) gleichzeitig und separat übertragen wird.

12. Verfahren nach Anspruch 10, das ferner Folgendes umfasst:
Empfangen einer Drosselsteuersignalübertragungswiederherstellungsnachricht via die Kommunikationsschnittstelle (13) und
Beenden des Übertragens des Drosselsteuersignals via die Kommunikationsschnittstelle (13) gemäß der Drosselsteuersignalübertragungswiederherstellungsnachricht.

13. Elektronische Drehzahlsteuerung (1), die Folgendes umfasst: einen Prozessor; eine Drosselsignalschnittstelle (12) zum Empfangen eines Drosselsteuersignals und eine Kommunikationsschnittstelle (13) zum Übertragen von Kommunikationsdaten,
wobei die Drosselsignalschnittstelle (12) dazu ausgelegt ist, das Drosselsteuersignal von einer Steuerung (2) zu empfangen, und
wobei die Kommunikationsschnittstelle (13) dazu ausgelegt ist, eine ausführbare Datei oder einen Debuggingparameter von der Steuerung (2) zu empfangen, und
wobei die Kommunikationsschnittstelle (13) dazu ausgelegt ist, Betriebsdaten zur Steuerung (2) zu übertragen,
und wobei die elektronische Drehzahlsteuerung (1) eine Überwachungsschaltung umfasst, die dazu ausgelegt ist zu bestimmen, ob das an der Drosselsignalschnittstelle (13) empfangene Drosselsteuersignal unnormal ist,
und wobei der Prozessor dazu ausgelegt ist, das Drosselsteuersignal via die Kommunikationsschnittstelle (13) zu empfangen, wenn der Signalübertragungszustand der Drosselsignalschnittstelle (12), die in Echtzeit überwacht wird, ein unnormaler Zustand ist.

14. Steuerung (2) zur Verwendung mit der elektronischen Drehzahlsteuerung (1) nach Anspruch 13, die Folgendes umfasst: einen Prozessor; eine Drosselsignalschnittstelle (12) zum Übertragen eines Drosselsteuersignals und eine Kommunikationsschnittstelle (13) zum Übertragen von Kommunikationsdaten, wobei
die Drosselsteuersignalschnittstelle (12) dazu ausgelegt ist, das Drosselsteuersignal zur elektronischen Drehzahlsteuerung (1) zu übertragen; und
die Kommunikationsschnittstelle (12) dazu ausgelegt ist, eine ausführbare Datei oder einen Debuggingparameter zur elektronischen Drehzahlsteuerung (1) zu übertragen;
wobei die Kommunikationsschnittstelle (13) dazu ausgelegt ist, Betriebsdaten via die Kommunikationsschnittstelle (13) von der elektronischen Drehzahlsteuerung (1) zu empfangen; und
der Prozessor dazu ausgelegt ist, das Drosselsteuersignal via die Kommunikationsschnittstelle (13) zu übertragen.

15. Mobile Plattform, die Folgendes umfasst: einen Motor; eine Steuerung (2) nach Anspruch 14 und eine elektronische Drehzahlsteuerung (1) nach Anspruch 13, wobei
der Motor (3) mit der elektronischen Drehzahlsteuerung verbunden ist;
ein Drosselkanal zum Übertragen eines Drosselsteuersignals und ein Kommunikationskanal zum Übertragen von Kommunikationsdaten zwischen der elektronischen Drehzahlsteuerung (1) und der Steuerung (2) angeordnet sind,
wobei die Steuerung (2) ein Drosselsteuersignal via den Drosselkanal zur elektronischen Drehzahlsteuerung (1) überträgt und die elektronische Drehzahlsteuerung (1) das Drosselsteuersignal via den Kommunikationskanal empfängt, wenn der Signalübertragungszustand des Drosselkanals ein unnormaler Zustand ist.

## Revendications

1. Procédé de traitement de signal de commande d'accélération, le procédé étant adapté à un régulateur de vitesse électronique (1) qui est doté d'une interface de signal d'accélération (12) destinée à recevoir un signal de commande d'accélération, et d'une interface de communication (13) destinée à transmettre des données de communication, et le procédé comprenant les étapes ci-dessous consistant à :
recevoir, en provenance d'un contrôleur (2), le signal de commande d'accélération, par l'intermédiaire de l'interface de signal d'accélération (12) ;
recevoir, en provenance du contrôleur (2), un fichier exécutable ou un paramètre de débogage, par l'intermédiaire de l'interface de communication (13) ;
transmettre, au contrôleur (2), des données de fonctionnement, par l'intermédiaire de l'interface de communication (13) ;
surveiller un état de transmission de signal de l'interface de signal d'accélération (12) en temps réel ; et
déterminer que le signal d'accélération reçu au niveau de l'interface de signal d'accélération (12) est anormal ; et
recevoir le signal de commande d'accélération, par l'intermédiaire de l'interface de communication (13), si l'état de transmission de signal de l'interface de signal d'accélération (12) est un état anormal.

2. Procédé selon la revendication 1, dans lequel l'état anormal est un état dans lequel aucun signal de commande d'accélération n'est reçu par l'intermédiaire de l'interface de signal d'accélération (12), ou un état dans lequel le signal de commande d'accélération reçu par l'intermédiaire de l'interface de signal d'accélération (12) indique une fréquence de signal instable.

3. Procédé selon la revendication 2, dans lequel :
il est déterminé si le signal de commande d'accélération reçu par l'intermédiaire de l'interface de signal d'accélération (12) indique une fréquence de signal instable selon que des informations de caractéristiques du signal de commande d'accélération reçu par l'intermédiaire de l'interface de signal d'accélération (12) satisfont une condition prédéfinie.

4. Procédé selon la revendication 3, dans lequel les informations de caractéristiques correspondent à des informations de fréquence, et/ou à des informations de largeur d'impulsion, du signal de commande d'accélération.

5. Procédé selon la revendication 1, comprenant en outre l'étape ci-dessous consistant à :
transmettre un message d'erreur de transmission de signal de commande d'accélération, par l'intermédiaire de l'interface de communication (13), si l'état de transmission de signal de l'interface de signal d'accélération (12) est un état anormal.

6. Procédé selon la revendication 1, dans lequel le signal de commande d'accélération est transmis simultanément et séparément, en parallèle, par l'intermédiaire de l'interface de signal d'accélération (12) et de l'interface de communication (13).

7. Procédé selon la revendication 1, dans lequel le signal de commande d'accélération présente des formats de signal différents lorsqu'il est transmis par l'intermédiaire de l'interface de signal d'accélération (12) et lorsqu'il est transmis par l'intermédiaire de l'interface de communication (13).

8. Procédé selon la revendication 1, comprenant en outre l'étape ci-dessous consistant à :
recevoir le signal de commande d'accélération par l'intermédiaire de l'interface de signal d'accélération (12) lorsque l'état de transmission de signal de l'interface de signal d'accélération (12) est un état normal.

9. Procédé de traitement de signal de commande d'accélération, le procédé étant adapté à un contrôleur (2) qui est doté d'une interface de signal d'accélération (12) destinée à transmettre un signal de commande d'accélération, et d'une interface de communication (13) destinée à transmettre des données de communication, et le procédé comprenant les étapes ci-dessous consistant à :
transmettre, à un régulateur de vitesse électronique (1), le signal de commande d'accélération, par l'intermédiaire de l'interface de signal d'accélération (12) ;
transmettre, au régulateur de vitesse électronique (1), un fichier exécutable ou un paramètre de débogage, par l'intermédiaire de l'interface de communication (13) ;
recevoir, en provenance du régulateur de vitesse électronique (1), des données de fonctionnement, par l'intermédiaire de l'interface de communication (13) ; et
transmettre un signal de commande d'accélération, par l'intermédiaire de l'interface de communication (13).

10. Procédé selon la revendication 9, dans lequel l'étape de transmission d'un signal de commande d'accélération, par l'intermédiaire de l'interface de communication (13), comprend les étapes ci-dessous consistant à :
recevoir un message d'erreur de transmission de signal de commande d'accélération, par l'intermédiaire de l'interface de communication (13) ; et
transmettre le signal de commande d'accélération, par l'intermédiaire de l'interface de communication (13), selon le message d'erreur de transmission de signal de commande d'accélération.

11. Procédé selon la revendication 9, dans lequel le signal de commande d'accélération est transmis simultanément, et séparément, par l'intermédiaire de l'interface de signal d'accélération (12) et de l'interface de communication (13).

12. Procédé selon la revendication 10, comprenant en outre les étapes ci-dessous consistant à :
recevoir un message de récupération de transmission de signal de commande d'accélération, par l'intermédiaire de l'interface de communication (13) ; et
mettre fin à la transmission du signal de commande d'accélération, par l'intermédiaire de l'interface de communication (13), selon le message de récupération de transmission de signal de commande d'accélération.

13. Régulateur de vitesse électronique (1), comprenant: un processeur ; une interface de signal d'accélération (12) destinée à recevoir un signal de commande d'accélération ; et une interface de communication (13) destinée à transmettre des données de communication ;
dans lequel l'interface de signal d'accélération (12) est configurée de manière à recevoir le signal de commande d'accélération en provenance d'un contrôleur (2) ;
dans lequel l'interface de communication (13) est configurée de manière à recevoir un fichier exécutable ou un paramètre de débogage en provenance du contrôleur (2) ;
dans lequel l'interface de communication (13) est configurée de manière à transmettre des données de fonctionnement au contrôleur (2) ;
dans lequel le régulateur de vitesse électronique (1) comprend un circuit de surveillance configuré de manière à déterminer si le signal de commande d'accélération reçu au niveau de l'interface de signal d'accélération (13) est anormal ; et
dans lequel le processeur est configuré de manière à recevoir le signal de commande d'accélération, par l'intermédiaire de l'interface de communication (13), lorsque l'état de transmission de signal de l'interface de signal d'accélération (12) surveillé en temps réel est un état anormal.

14. Contrôleur (2) destiné à être utilisé avec le régulateur de vitesse électronique (1) selon la revendication 13, comprenant: un processeur ; une interface de signal d'accélération (12) destinée à transmettre un signal de commande d'accélération ; et une interface de communication (13) destinée à transmettre des données de communication, dans lequel :
l'interface de signal d'accélération (12) est configurée de manière à transmettre, au régulateur de vitesse électronique (1), le signal de commande d'accélération ; et
l'interface de communication (12) est configurée de manière à transmettre, au régulateur de vitesse électronique (1), un fichier exécutable ou un paramètre de débogage ;
dans lequel l'interface de communication (13) est configurée de manière à recevoir, en provenance du régulateur de vitesse électronique (1), des données de fonctionnement, par l'intermédiaire de l'interface de communication (13) ; et
le processeur est configuré de manière à transmettre le signal de commande d'accélération, par l'intermédiaire de l'interface de communication (13).

15. Plateforme mobile, comprenant: un moteur ; un contrôleur (2) selon la revendication 14 ; et un régulateur de vitesse électronique (1) selon la revendication 13, dans laquelle :
le moteur (3) est connecté au régulateur de vitesse électronique ;
un canal d'accélération destiné à transmettre un signal de commande d'accélération et un canal de communication destiné à transmettre des données de communication sont agencés entre le régulateur de vitesse électronique (1) et le contrôleur (2) ; et
le contrôleur (2) transmet un signal de commande d'accélération au régulateur de vitesse électronique (1) par l'intermédiaire du canal d'accélération ; et le régulateur de vitesse électronique (1) reçoit le signal de commande d'accélération, par l'intermédiaire du canal de communication, lorsque l'état de transmission de signal du canal d'accélération est un état anormal.
